# EUROPEAN PATENT APPLICATION

(11) **EP 4 614 702 A1**
(43) Date of publication of application: **10.09.2025**
(21) Application number: 24868780.8
(22) Date of filing: 13.09.2024
(51) Int. Cl.: H01M 50/242, H01M 10/613, H01M 50/35, H01M 50/211, H01M 10/6556

(54) **BATTERY PACK**

(30) Priority: 21.09.2023 KR 20230126175
(71) Applicant: LG Energy Solution, Ltd., Seoul 07335 (KR)
(72) Inventor: KIM, Da Young, Daejeon 34122 (KR); KIM, Gwan Woo, Daejeon 34122 (KR); JANG, Sung Hwan, Daejeon 34122 (KR); KIM, Jae Wook, Daejeon 34122 (KR)
(74) Representative: Plasseraud IP
(86) International application number: PCT/KR2024/096149
(87) International publication number: WO 2025/063805

(57) **Abstract**

The present technology provides a battery assembly including: a cell block with a plurality of battery cells and a first cover plate covering a first surface of the cell block; and a pack housing configured to accommodate the battery assembly and including a first housing plate facing the first cover plate of the battery assembly, in which the first housing plate includes a first flat part and a first protruding part protruding from the first flat part in a direction away from the cell block, and the first cover plate includes a second flat part vertically overlapping the first protruding part of the first housing plate, a second protruding part protruding from the second flat part in a direction away from the cell block, and a cooling channel defined by the second protruding part.

## Description

### [Technical Field]

The present invention relates to a battery pack.

This application claims the benefit of priority based on Korean Patent Application No. 10-2023-0126175, filed on September 21, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery pack with improved safety.

### [Technical Solution]

An aspect of the present invention provides a battery pack including: a battery assembly including a cell block with a plurality of battery cells and a first cover plate covering a first surface of the cell block; and a pack housing configured to accommodate the battery assembly and including a first housing plate facing the first cover plate of the battery assembly, in which the first housing plate includes a first flat part and a first protruding part protruding from the first flat part in a direction away from the cell block, and the first cover plate includes a second flat part vertically overlapping the first protruding part of the first housing plate, a second protruding part protruding from the second flat part in a direction away from the cell block, and a cooling channel defined by the second protruding part.

In example embodiments, a distance between the first flat part of the first housing plate and the first cover plate may be less than a distance between the first protruding part of the first housing plate and the first cover plate.

In example embodiments, the first housing plate may include a first buffer space formed as the first protruding part protrudes from the first flat part.

In example embodiments, the first flat part of the first housing plate may be in contact with the first protruding part of the first cover plate.

In example embodiments, the battery assembly may further include a second cover plate disposed to face a second surface of the cell block and including a venting hole, the pack housing may further include a second housing plate facing the second cover plate of the battery assembly, the second housing plate may include a third flat part and a third protruding part protruding from the third flat part in a direction away from the cell block, and the venting hole of the second cover plate may vertically overlap the third protruding part of the second housing plate.

In example embodiments, a distance between the third flat part of the second housing plate and the second cover plate may be less than a distance between the third protruding part of the second housing plate and the second cover plate.

In example embodiments, the second housing plate may include a second buffer space formed as the third protruding part protrudes from the third flat part, and the second buffer space may communicate with the venting hole of the second cover plate.

In example embodiments, a part of the second buffer space may be located on an area that does not overlap the second surface of the cell block.

In example embodiments, the third flat part of the second housing plate may be in contact with the second cover plate.

In example embodiments, the first and second surfaces of the cell block may be opposite to each other.

In example embodiments, the battery assembly may include a case configured to accommodate the cell block, the case may include the first cover plate, the second cover plate, and a side cover plate covering a side surface of the cell block, and the side cover plate may include a fastening flange configured to be fastened to a support structure of the pack housing.

An aspect of the present invention provides a battery pack including: a battery assembly including a cell block with a plurality of battery cells and a cover plate covering a surface of the cell block; and a pack housing configured to accommodate the battery assembly, and including a housing plate facing the cover plate of the battery assembly, in which the housing plate includes a flat part and a protruding part protruding from the flat part in a direction away from the cell block, and the cover plate includes at least one venting hole vertically overlapping the protruding part of the housing plate.

In example embodiments, the housing plate may include a buffer space formed as the protruding part protrudes from the flat part, and the venting hole of the cover plate may communicate with the buffer space of the housing plate.

In example embodiments, the cover plate may include a plurality of venting holes, and the buffer space communicates with the plurality of venting holes.

In example embodiments, the battery assembly may further include a cooling plate facing another surface of the cell block opposite the surface of the cell block and including a cooling channel, and a side cover plate covering a side of the cell block and including a fastening flange to be fastened to a support structure of the pack housing.

### [Advantageous Effects]

According to example embodiments of the present invention, a pack housing provides a buffer space for preventing or suppressing damage to a cell block due to an external impact in an area overlapping a first cover plate of a battery assembly, which includes a cooling channel, and/or an area overlapping a second cooling plate of the battery assembly, which includes a venting hole, thereby improving the safety of a battery pack.

Furthermore, according to example embodiments of the present invention, the pack housing provides a buffer space functioning as a venting channel in communication with the venting hole in an area overlapping the second cover plate of the battery assembly, which includes the venting hole. Thus, a high-temperature gas can be discharged in a predetermined direction in a thermal event situation, thereby improving the safety of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a cross-sectional view of a battery pack according to embodiments of the present invention.
FIG. 2 is an enlarged view of an area indicated by "EX1" of FIG. 1.
FIG. 3 is a perspective view of a battery assembly included in the battery pack of FIG. 1.
FIG. 4 is a cross-sectional view of a battery pack according to example embodiments of the present invention.
FIG. 5 is a schematic plan view of a second cover plate and a second housing plate shown in FIG. 4.
FIG. 6 is a cross-sectional view of a battery pack according to example embodiments of the present invention.
FIG. 7 is a schematic view of an electric vehicle in which a battery pack according to example embodiments of the present invention is mounted.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

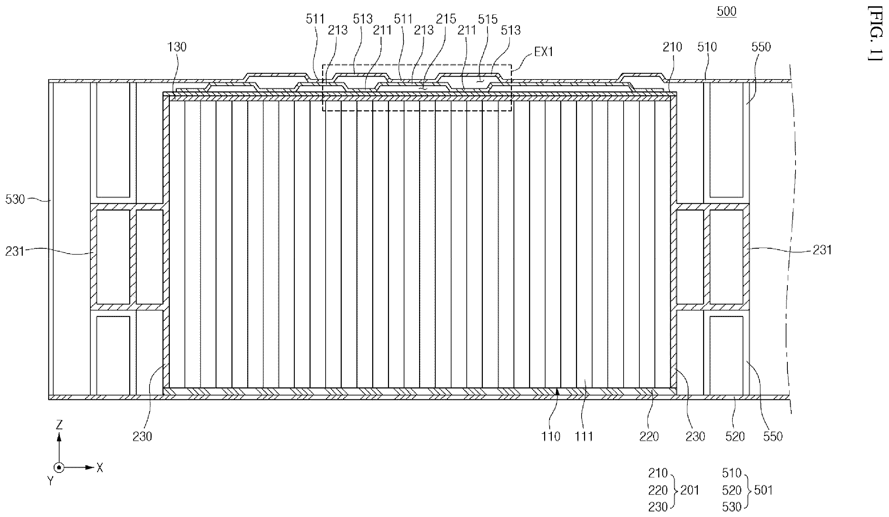

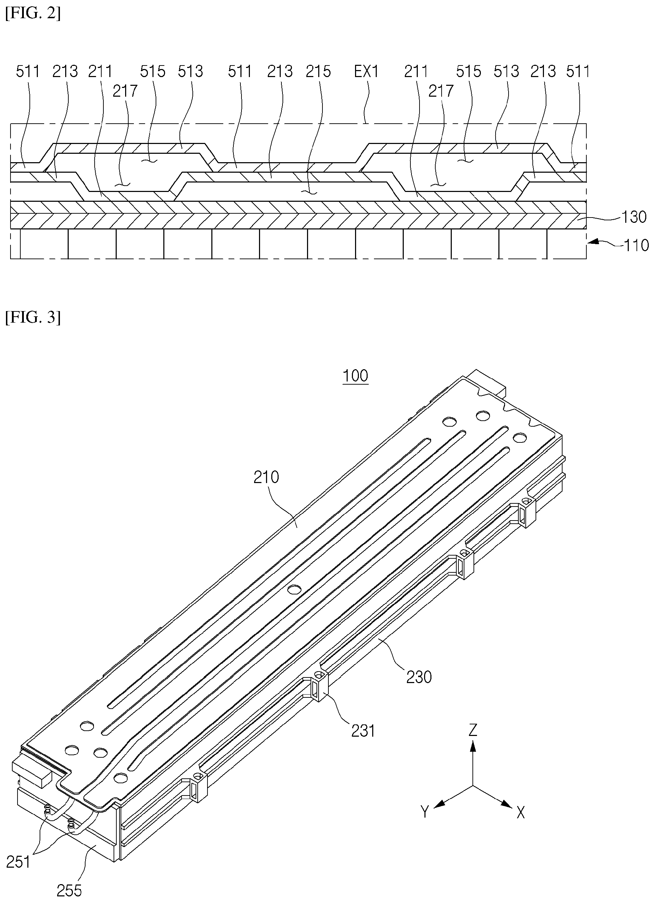

FIG. 1 is a cross-sectional view of a battery pack 500 according to example embodiments of the present invention. FIG. 2 is an enlarged view of an area indicated by "EX1" of FIG. 1. FIG. 3 is a perspective view of a battery assembly 100 included in the battery pack 500 of FIG. 1.

Referring to FIGS. 1 to 3, the battery pack 500 may include a pack housing 501, and a battery assembly 100 in the pack housing 501. The battery pack 500 may include one or more battery assemblies 100 in the pack housing 501. In example embodiments, the battery pack 500 may include two or more battery assemblies 100 arranged in a first direction (e.g., an X-axis direction).

The pack housing 501 may provide an accommodation space for accommodation of the battery assembly 100. The pack housing 501 may include a first housing plate 510, a second housing plate 520, and a side wall 530. The first housing plate 510 and the second housing plate 520 may be spaced apart from each other in a vertical direction (e.g., a Z-axis direction) with the accommodation space therebetween. The side wall 530 may extend from the first housing plate 510 to the second housing plate 520 in the vertical direction (e.g., the Z-axis direction).

The pack housing 501 may include a plurality of support structures 550 for supporting the battery assembly 100. Each of the battery assemblies 100 may be supported on and fastened to the pack housing 501 by one or more support structures 550. The pack housing 501 may include support structures 550 extending from the first housing plate 510 and/or support structures 550 extending from the second housing plate 520. In the drawings, the pack housing 501 includes the support structures 550 extending from the first housing plate 510 and the support structures 550 extending from the second housing plate 520 but embodiments are not limited thereto. The pack housing 501 may include only the support structures 550 extending from the first housing plate 510 or only the support structures 550 extending from the second housing plate 520.

The battery assembly 100 may include a cell block 110 and a case 201.

The cell block 110 may include a plurality of battery cells 111. Each of the battery cells 111 is a basic unit of a lithium ion battery, i.e., a secondary battery. Each of the battery cells 111 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one battery assembly 100 in a first direction (e.g., an X-axis direction). In example embodiments, in each battery assembly 100, a plurality of battery cells 111 may be pouch type battery cells whose length in the first direction (e.g., the X-axis direction) is less than a length thereof in a second direction (e.g., a Y-axis direction) and be stacked in the first direction (e.g., the X-axis direction).

When viewed from a plan view, the cell block 110 may have a rectangular shape whose length in the first direction (e.g., the X-axis direction) is less than a length thereof in the second direction (e.g., the Y-axis direction). In this case, the cell block 110 may have two side surfaces (i.e., a first side surface and a second side surface) facing each other in the first direction (e.g., the X-axis direction), a front surface and a rear surface facing each other in the second direction (e.g., the Y-axis direction), and a first surface (e.g., an upper surface) and a second surface (e.g., a lower surface) facing each other in the vertical direction (e.g., the Z-axis direction).

A bus bar frame on which bus bars are mounted may be on each of the front and rear surfaces of the cell block 110. A plurality of bus bars may be mounted on the bus bar frame on the front surface of the cell block 110, and a plurality of bus bars may be mounted on the bus bar frame on the rear surface of the cell block 110. The battery assembly 100 may further include an end plate 255 covering the bus bar frame on the front surface of the cell block 110 and an end plate 255 covering the bus bar frame on the rear surface of the cell block 110.

A bus bar may be coupled to an electrode lead of the battery cell 111. For example, the bus bar may be coupled to the electrode lead of the battery cell 111 by welding. For example, each bus bar may be an inter-bus bar connected to electrode leads connected to different battery cells 111 belonging to the cell block 110 to electrically connect the different battery cells 111. For example, each bus bar may be a terminal-bus bar for electrically connecting the cell block 110 to another cell block or a battery device.

In example embodiments, the battery assembly 100 may include a single cell block 110. In example embodiments, the battery assembly 100 may include a cell block array with a plurality of cell blocks 110 spaced apart from each other in the second direction (e.g., the Y-axis direction). For example, the battery assembly 100 may include two cell blocks 110 arranged in the second direction (e.g., the Y-axis direction). For example, the battery assembly 100 may include a first cell block and a second cell block arranged in the second direction (e.g., the Y-axis direction) and electrically connected to each other.

The case 201 may surround the cell block 110. The case 201 may include a first cover plate 210, a second cover plate 220, and side cover plates 230. The case 201 may cover the first surface, the second surface, the first side surface, and the second side surface of the cell block 110.

The first cover plate 210 may cover the first surface of the cell block 110. The first cover plate 210 may be attached to the first surface of the cell block 110 and be thermally coupled to the cell block 110. For example, the first cover plate 210 may be attached to the first surface of the cell block 110 through a thermally conductive adhesive layer 130 between the first cover plate 120 and the upper surface of the cell block 110. For example, the thermally conductive adhesive layer 139 may include a thermal interface material (TIM).

The first cover plate 210 may include a cooling channel 215 configured to allow a cooling fluid to flow therethrough and be configured to cool the cell block 110. The first cover plate 210 may be referred to as a cooling plate. The first cover plate 210 may be thermally coupled to the cell block 110 through the thermally conductive adhesive layer 130 to cool the cell block 110. The first cover plate 210 may be supplied with a cooling fluid or discharge the cooling fluid to the outside through pipes 251 connected to a portion protruding from the front surface of the cell block 110 to one side. The cooling fluid supplied from the outside of the battery assembly 100 may flow into the cooling channel 215 through a pipe 251 connected to an inlet of the cooling channel 215, flow along the cooling channel 215, be discharged through an outlet of the cooling channel 215, and thereafter be discharged to the outside through another pipe 251. For example, the cooling channel 215 may provide a single path extending from the inlet of the cooling channel 215 to the outlet of the cooling channel 215. While the cooling fluid flows along the cooling channel 215, the battery assembly 100 may be cooled. For example, the first cover plate 210 may be manufactured by bonding two plates together, and the cooling channel 215 may include a space defined between the two plates.

The first cover plate 210 may include a flat part 211 and a protruding part 213 protruding from the flat part 211. The flat part 211 may face the first housing plate 510 and provide a flat outer surface. The protruding part 213 may protrude from the flat part 211 in a direction away from the cell block 110 or a direction toward the first housing plate 510 from the cell block 110. When viewed in a cross-sectional view, in the first cover plate 210, the protruding part 213 may be located between two flat parts 211. The first cover plate 210 may have an uneven structure in which the flat part 211 and the protruding part 213 are repeatedly arranged.

In the first cover plate 210, the cooling channel 215 may be defined by the protruding part 213 of the first cover plate 210. In the first cover plate 210, the cooling channel 215 may include a space located under the protruding part 213 and covered with the protruding part 213. Due to the uneven structure of the first cover plate 210, the first cover plate 210 may include a space 217 defined by the outer surface of the flat part 211 and surfaces of protruding parts 213 adjacent to the flat part 211.

The first housing plate 510 of the pack housing 501 may include a flat part 511 and a protruding part 513 protruding from the flat part 511. The flat part 511 may face the first cover plate 210 and provide a surface extending evenly. The flat part 511 of the first housing plate 510 may be in direct contact with or be spaced a certain distance from the protruding part 213 of the first cover plate 210. In the first housing plate 510, the protruding part 513 may protrude from the flat part 511 in a direction away from the cell block 110 or a direction toward the first housing plate 510 from the cell block 110. The protruding part 513 of the first housing plate 510 may be spaced apart from the first cover plate 210. When viewed in a cross-sectional view, in the first housing plate 510, the protruding part 513 may be located between two flat parts 511. The first housing plate 510 may have an uneven structure in which the flat part 511 and the protruding part 513 are repeatedly arranged.

Due to the uneven structure of the first housing plate 510, the first housing plate 510 may provide a first buffer space 515 below the protruding part 513. The first buffer space 515 may be a space formed as the protruding part 513 protrudes from the flat part 511. When viewed in a cross-sectional view, one protruding part 513 of the first housing plate 510 may partially overlap each of two protruding parts 213 of first cover plates 210 on opposite sides of one flat part 211 of the first cover plate 210, and the first buffer space 515 may be above each of the two protruding parts 213 of the first cover plates 210 on the opposite sides of the one flat part 211 of the first cover plate 210.

A distance between the flat part 511 of the first housing plate 510 and the first cover plate 210 may be less than a distance between the protruding part 513 of the first housing plate 510 and the first cover plate 210. In embodiments, the flat part 211 of the first cover plate 210 may overlap the protruding part 513 of the first housing plate 510 in the vertical direction (e.g., the Z-axis direction). In this case, the first buffer space 515 provided by the first housing plate 510 may communicate with the space 217 defined by the outer surface of the first cover plate 210. When an external impact is applied to the pack housing 501, the first buffer space 515 provided by the first housing plate 510 may function as a buffer space against the external impact to prevent or suppress damage to the cell block 110 due to the external impact.

The second cover plate 220 may cover the second surface of the cell block 110. The second cover plate 220 may be spaced apart from the first cover plate 210 in the vertical direction (e.g., the Z-axis direction) with the cell block 110 interposed therebetween.

The side cover plates 230 may be spaced apart from each other in the first direction (e.g., the X-axis direction) with the cell block 110 interposed therebetween. One of the two side cover plates 230 may cover the first side surface of the cell block 110, and the other may cover the second side surface of the cell block 110.

Each of the side cover plates 230 may be coupled to the first cover plate 210 and the second cover plate 220. For example, an upper end or edge of each of the side cover plates 230 may be coupled to one side or edge of the first cover plate 210 by welding, and a lower end or edge thereof may be coupled to one side or edge of the second cover plate 220 by welding.

Each of the side cover plates 230 may include a plurality of fastening flanges 231 fastened to and supported by the support structure 550 of the pack housing 501. Each of the support structures 550 of the pack housing 501 may extend along the battery assembly 100 in the second direction (e.g., the Y-axis direction) and be fastened to each of the fastening flanges 231 of the side cover plate 230 by a fastening member such as a bolt. As the fastening flanges 231 of the side cover plate 230 are fastened to and supported by the support structures 550 corresponding thereto, the battery assembly 100 may be mounted in the pack housing 501 in a side mounting manner.

In example embodiments, the battery pack 500 may be installed in a vehicle frame of a vehicle, the first housing plate 510 of the pack housing 501 may correspond to a top plate or pack lid of the pack housing 501 connected to an upper side of the vehicle frame providing a cabin room which passengers get in, and the second housing plate 520 of the pack housing 501 may correspond to a bottom plate of the pack housing 501 connected to a lower side of the vehicle frame adjacent to the ground.

In some example embodiments, the second cover plate 220 of the battery assembly 100 may be in contact with the second housing plate 520 corresponding to a bottom plate of the pack housing 501. In some example embodiments, the second cover plate 220 of the battery assembly 100 is spaced apart from the second housing plate 520 of the pack housing 501 in the vertical direction (e.g., in the Z-axis direction), and a free volume may be provided between the second cover plate 220 of the battery assembly 100 and the second housing plate 520 of the pack housing 501. The free volume may include a space between the case 201 of the battery assembly 100 and the pack housing 501. The support structures 550 of the pack housing 501 may support the battery assembly 100 such that the case 201 is spaced apart from the second housing plate 520.

In some example embodiments, the first housing plate 510 of the pack housing 501 may correspond to the bottom plate of the pack housing 501 connected to the lower side of the vehicle frame adjacent to the ground, and the second housing plate 520 of the pack housing 501 may correspond to the top plate or pack lid of the pack housing 501 connected to the upper side of the vehicle frame providing the cabin room which passengers get in.

According to example embodiments of the present invention, the pack housing 501 provides a buffer space for preventing or suppressing damage to the cell block 110 due to an external impact in an area overlapping the first cover plate 210 of the battery assembly 100, which includes the cooling channel 215, thereby improving the safety of the battery pack 500.

### (Second Embodiment)

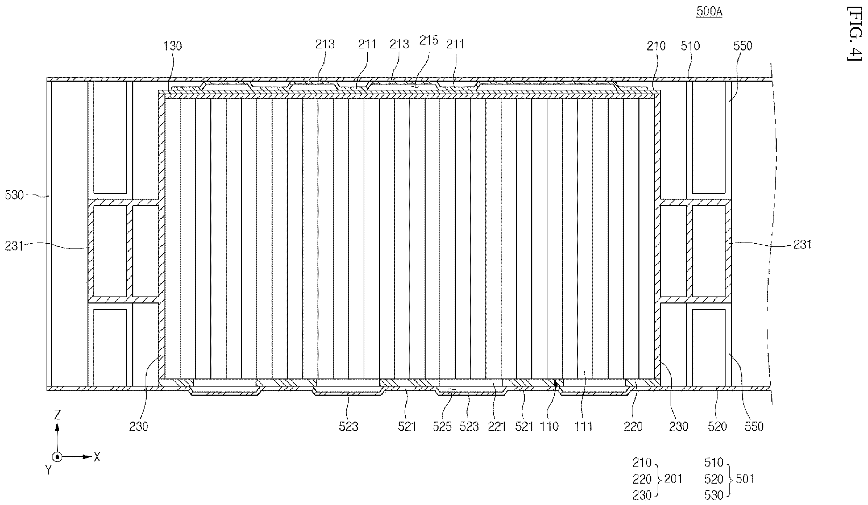

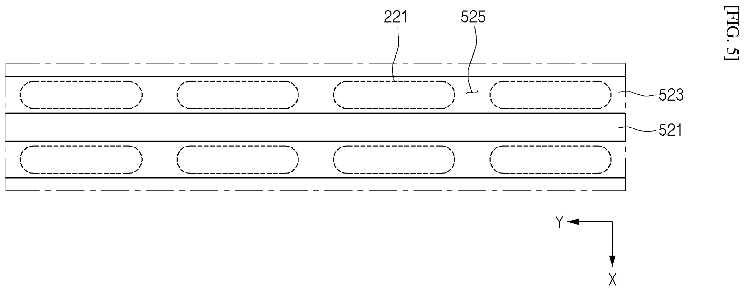

FIG. 4 is a cross-sectional view of a battery pack 500A according to example embodiments of the present invention. FIG. 5 is a schematic plan view of a second cover plate and a second housing plate shown in FIG. 4. Hereinafter, the battery pack 500A of FIGS. 4 and 5 will be described focusing on differences from the battery pack 500 described above with reference to FIGS. 1 to 3.

Referring to FIGS. 4 and 5, the second cover plate 220 may include a plurality of venting holes 221 for exhausting a high-temperature gas generated from the cell block 110 to a space outside the case 201. The plurality of venting holes 221 of the second cover plate 220 may be arranged to overlap the cell block 110 in the vertical direction (e.g., the Z-axis direction). In example embodiments, each of the venting holes 221 may be an elliptical hole or a slot hole with a major axis in the second direction (e.g., the Y-axis direction). A length of the venting holes 221 in the first direction (e.g., the X-axis direction) may be less than a length of the venting holes 221 in the second direction (e.g., the Y-axis direction).

The second housing plate 520 of the pack housing 501 may include a flat part 521 and a protruding part 523 protruding from the flat part 521. The flat part 521 may face the second cover plate 220 and provide a surface extending evenly. The flat part 521 of the second housing plate 520 may be in direct contact with or be spaced a certain distance from the second cover plate 220. In the second housing plate 520, the protruding part 523 may protrude from the flat part 521 in a direction away from the cell block 110 or a direction toward the second housing plate 520 from the cell block 110. The protruding part 523 of the second housing plate 520 may be spaced apart from the second cover plate 220. When viewed in a cross-sectional view, in the second housing plate 520, the protruding part 523 may be located between two flat parts 521. The second housing plate 520 may have an uneven structure in which the flat part 521 and the protruding part 523 are repeatedly arranged.

A distance between the flat part 521 of the second housing plate 520 and the second cover plate 220 may be less than a distance between the protruding part 523 of the second housing plate 520 and the second cover plate 220.

Due to the uneven structure of the second housing plate 520, the second housing plate 520 may provide a second buffer space 525 defined by the protruding part 523. The second buffer space 525 may be a space formed as the protruding part 523 protrudes from the flat part 521. When an external impact is applied to the pack housing 501, the second buffer space 525 provided by the second housing plate 520 may function as a buffer space against the external impact to prevent or suppress damage to the cell block 110 due to the external impact.

In embodiments, the venting holes 221 of the second cover plate 220 may overlap the protruding part 523 of the second housing plate 520 in the vertical direction (e.g., the Z-axis direction). In this case, the second buffer space 525 provided by the second housing plate 520 may communicate with the venting holes 221 of the second cover plate 220, and the second buffer space 525 of the second housing plate 520 may form a venting channel through which a high-temperature gas flows, together with the venting holes 221 of the second cover plate 220. For example, a high-temperature gas discharged from the cell block 110 may flow into the second buffer space 525 of the second housing plate 520 through the venting holes 221 of the second cover plate 220 and flow in a direction in which the second buffer space 525 extends.

The second buffer space 525 may overlap and communicate with the venting holes 221 in the vertical direction (e.g., the Z-axis direction). In example embodiments, the second buffer space 525 may extend in the second direction (e.g., the Y-axis direction), and overlap and communicate with the venting holes 221, which are arranged in the second direction (e.g., the Y-axis direction), in the vertical direction (e.g., the Z-axis direction).

In some example embodiments, a part of the second buffer space 525 may vertically overlap the cell block 110, and another part thereof may not vertically overlap the cell block 110. In this case, a gas generated from the cell block 110 may be discharged to a space outside the battery assembly 100 along the second buffer space 525.

In some example embodiments, the first housing plate 510 of the pack housing 501 may correspond to the top plate or pack lid of the pack housing 501 connected to an upper side of a vehicle frame providing a cabin room which passengers get in, and the second housing plate 520 of the pack housing 501 may correspond to the bottom plate of the pack housing 501 connected to a lower side of the vehicle frame adjacent to the ground. In some example embodiments, the first housing plate 510 of the pack housing 501 may correspond to the bottom plate, and the second housing plate 520 of the pack housing 501 may correspond to the top plate or pack lid of the pack housing 501.

According to example embodiments of the present invention, the pack housing 501 provides a buffer space preventing or suppressing damage to the cell block 110 due to an external impact and functioning as a venting channel in communication with the venting holes 221 in an area overlapping the second cover plate 220 of the battery assembly 100, which includes the venting holes 221, thereby improving the safety of the battery pack 500A.

### (Third Embodiment)

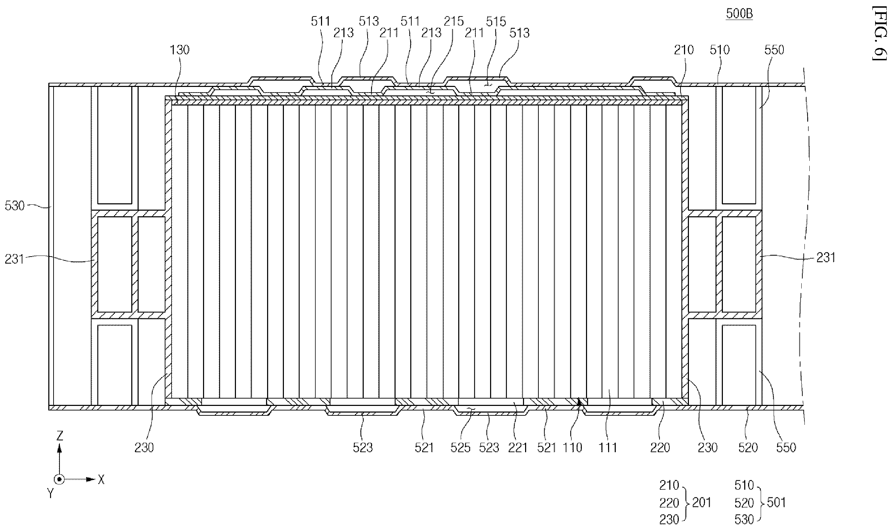

FIG. 6 is a cross-sectional view of a battery pack 500B according to example embodiments of the present invention. Hereinafter, the battery pack 500B of FIG. 6 will be described focusing on differences from the battery packs 500 and 500A described above with reference to FIGS. 1 to 5.

Referring to FIG. 6, in a pack housing 501 of the battery pack 500B, a first housing plate 510 may have an uneven structure including a flat part 511 and a protruding part 513, and a second housing plate 520 may have an uneven structure including a flat part 521 and a protruding part 523. The first housing plate 510 may provide a first buffer space 515 for buffering an external impact in an area overlapping a first cover plate 210 with a cooling channel 215. The second housing plate 520 may provide a second buffer space 525 buffering an external impact and functioning as a venting channel in an area overlapping a second cover plate 220.

In some example embodiments, the first housing plate 510 of the pack housing 501 may correspond to a top plate or pack lid of the pack housing 501 connected to an upper side of a vehicle frame providing a cabin room which passengers get in, and the second housing plate 520 of the pack housing 501 may correspond to a bottom plate of the pack housing 501 connected to a lower side of the vehicle frame adjacent to the ground. In some example embodiments, the first housing plate 510 of the pack housing 501 may correspond to the bottom plate, and the second housing plate 520 of the pack housing 501 may correspond to the top plate or pack lid of the pack housing 501.

According to example embodiments of the present invention, the pack housing 501 provides a buffer space for preventing or suppressing damage to a cell block 110 due to an external impact in an area overlapping the first cover plate 210 of the battery assembly 100, which includes a cooling channel 215, and/or an area overlapping the second cover plate 220 of the battery assembly 100, which includes venting holes 221, thereby improving the safety of the battery pack 500B.

Furthermore, according to example embodiments of the present invention, the pack housing 501 provides a buffer space functioning as a venting channel in communication with the venting holes 221 in an area overlapping the second cover plate 220 of the battery assembly 100, which includes the venting holes 221, and thus, a high-temperature gas can be discharged in a predetermined direction in a thermal event situation, thereby improving the safety of the battery pack 500B.

### (Fourth Embodiment)

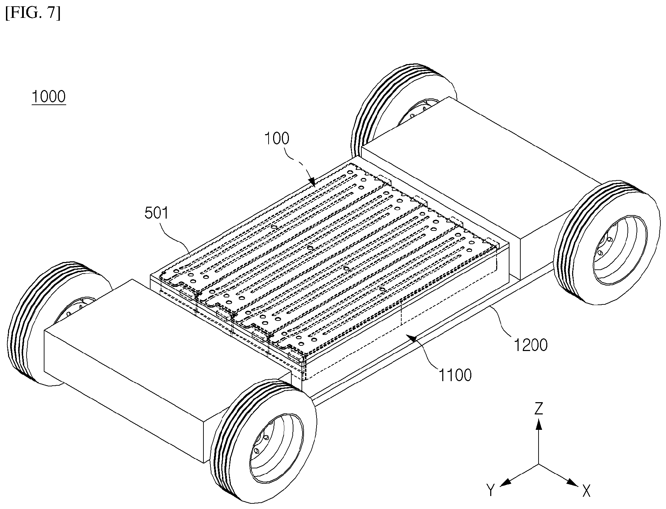

FIG. 7 is a schematic view of an electric vehicle 1000 in which a battery pack 1100 according to example embodiments of the present invention is mounted.

For the sake of simplicity, FIG. 7 illustrates only part of a vehicle body frame 1200 forming a lower frame of the electric vehicle 1000, and the battery pack 1100 and tires that are coupled to the vehicle body frame 1200. For example, the battery pack 1100 may include one of the battery packs 500, 500A and 500B described above with reference to FIGS. 1 to 6.

According to example embodiments of the present invention, when an external impact is applied to the battery pack 1100, a first buffer space and/or a second buffer space provided by the pack housing 501 may function as buffer spaces against the external impact to prevent damage to a cell block due to the external impact. Accordingly, the battery pack 1100 and the electric vehicle 1000 including the battery pack 1100 are capable of increasing the safety of passengers. In addition, the battery assembly 100 that is a key component can be protected, and the safety and durability of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a battery assembly including a cell block with a plurality of battery cells and a first cover plate covering a first surface of the cell block; and
a pack housing configured to accommodate the battery assembly, and including a first housing plate facing the first cover plate of the battery assembly,
wherein the first housing plate comprises a first flat part and a first protruding part protruding from the first flat part in a direction away from the cell block, and
the first cover plate comprises a second flat part vertically overlapping the first protruding part of the first housing plate, a second protruding part protruding from the second flat part in a direction away from the cell block and a cooling channel defined by the second protruding part.

2. The battery pack of claim 1, wherein
a distance between the first flat part of the first housing plate and the first cover plate is less than a distance between the first protruding part of the first housing plate and the first cover plate.

3. The battery pack of claim 1, wherein
the first housing plate comprises a first buffer space formed as the first protruding part protrudes from the first flat part.

4. The battery pack of claim 1, wherein
the first flat part of the first housing plate is in contact with the first protruding part of the first cover plate.

5. The battery pack of claim 1, wherein
the battery assembly further comprises a second cover plate disposed to face a second surface of the cell block and including a venting hole,
wherein the pack housing further comprises a second housing plate facing the second cover plate of the battery assembly,
the second housing plate comprises a third flat part and a third protruding part protruding from the third flat part in a direction away from the cell block, and
the venting hole of the second cover plate vertically overlaps the third protruding part of the second housing plate.

6. The battery pack of claim 5, wherein
a distance between the third flat part of the second housing plate and the second cover plate is less than a distance between the third protruding part of the second housing plate and the second cover plate.

7. The battery pack of claim 5, wherein
the second housing plate comprises a second buffer space formed as the third protruding part protrudes from the third flat part,
wherein the second buffer space communicates with the venting hole of the second cover plate.

8. The battery pack of claim 7, wherein
a part of the second buffer space is located on an area that does not overlap the second surface of the cell block.

9. The battery pack of claim 5, wherein
the third flat part of the second housing plate is in contact with the second cover plate.

10. The battery pack of claim 5, wherein
the first and second surfaces of the cell block are opposite to each other.

11. The battery pack of claim 5, wherein
the battery assembly comprises a case configured to accommodate the cell block,
wherein the case comprises the first cover plate, the second cover plate, and a side cover plate covering a side surface of the cell block, and
the side cover plate comprises a fastening flange configured to be fastened to a support structure of the pack housing.

12. A battery pack comprising:
a battery assembly including a cell block with a plurality of battery cells and a cover plate covering a surface of the cell block; and
a pack housing configured to accommodate the battery assembly, and including a housing plate facing the cover plate of the battery assembly,
wherein the housing plate comprises a flat part and a protruding part protruding from the flat part in a direction away from the cell block, and
the cover plate comprises at least one venting hole vertically overlapping the protruding part of the housing plate.

13. The battery pack of claim 12, wherein
the housing plate comprises a buffer space formed as the protruding part protrudes from the flat part, and
the venting hole of the cover plate communicates with the buffer space of the housing plate.

14. The battery pack of claim 13, wherein
the cover plate comprises a plurality of venting holes, and the buffer space communicates with the plurality of venting holes.

15. The battery pack of claim 14, wherein
the battery assembly further comprises:
a cooling plate facing another surface of the cell block opposite the surface of the cell block, and including a cooling channel; and
a side cover plate covering a side of the cell block, and including a fastening flange to be fastened to a support structure of the pack housing.
